# EUROPEAN PATENT SPECIFICATION

(11) **EP 4 060 121 B1**
(45) Date of publication and mention of the grant of the patent: **07.01.2026**
(21) Application number: 22162749.0
(22) Date of filing: 17.03.2022
(51) Int. Cl.: E02B 17/02, E02D 23/02, E02D 27/42, F03D 13/20, F03D 13/25

(54) **SUBSEA FOUNDATIONS**
UNTERWASSERFUNDAMENTE
FONDATIONS SOUS-MARINES

(30) Priority: 18.03.2021 GB 202103795
(43) Date of publication of application: 21.09.2022
(60) Divisional application: 25206513.1
(73) Proprietor: Seaway 7 Engineering B.V., 2719 EE Zoetermeer (NL)
(72) Inventor: MACLEAY, Alan John, Dalriada, AB51 0BJ (GB)
(74) Representative: Keltie LLP

(56) References cited:
- WO-A1-2010/019050
- WO-A2-2009/154472
- WO-A2-2014/060650
- CN-A- 101 545 462
- GB-A- 2 460 551

## Description

This invention relates to subsea foundations, in particular gravity foundations for columns that are analogous to monopiles used most commonly in offshore wind turbine installations. The invention addresses the challenges of increasing the capacity and/or reducing the size of a subsea foundation, especially in seabed locations that are characterised by a shallow soil substrate.

Foundations for offshore wind turbines are of three main types, namely: gravity foundations that are held on the seabed mainly by weight; driven foundations such as piles or monopiles that penetrate the seabed soil; and suction foundations that are embedded in soft seabed soil by pumping out water from within an open-bottomed skirt of the foundation.

Offshore wind turbine foundations are surmounted by a supporting structure that may extend above the surface of the sea. The supporting structure is typically one of two main types, namely: a stand-alone column; or a jacket or tripod that comprises three, four or more legs, each leg typically surmounting a respective foundation.

In some arrangements, the lower end of a column may be driven into the seabed like a monopile. Consequently, a column can double as a driven foundation and as a supporting structure that extends above the surface.

Driven foundations and suction foundations cannot penetrate solid rock and therefore rely upon there being a sufficient thickness or depth of seabed soil available above underlying rock. Whilst it is possible to drill into or otherwise to excavate rock to accommodate pile foundations, such additional operations are complex and costly and so are preferably avoided offshore.

For these reasons, gravity piles are preferred on a rocky seabed or where the underlying rock is close to the seabed, leaving a layer of soil that is too thin or shallow to accommodate the full buried extent of a driven foundation or a suction foundation. Indeed, where there is merely a thin layer or veneer of soil over shallow rock, the underlying rock beneficially contributes to the bearing capacity of a gravity foundation.

The first offshore wind turbine projects employed gravity foundations. In general, those projects involved relatively small turbines, of no more than 5MW in capacity, in relatively shallow water, or no more than 20m in depth. As the offshore wind industry has evolved to embrace larger turbines, of more than 10MW in capacity, in deeper water, of more than 50m in depth, the challenge has been to find a cost-effective method for building and installing suitable gravity foundations where the seabed so requires.

Much of the recent development work on gravity foundations for use in the offshore wind industry has been on crane-free solutions using self-buoyant or self-floating structures. For example, a known solution for larger turbines comprises a steel monopile cast into a concrete caisson. That assembly is built in a dry dock, for example by slipforming the caisson around the monopile, towed to an installation site and then installed by flooding the caisson. After landing on the seabed, sand is then added to the caisson as ballast. An example of such an arrangement is shown in GB 2460551.

Provisions to control the buoyancy of a self-buoyant structure serve no purpose after the structure has been installed. They may also attract additional hydrodynamic loading, which can be a hindrance during transportation and installation. Also, concrete gravity base structures require specialised concrete fabrication sites, located as close as possible to installation sites. In this respect, towing requires a favourable sea state and so must be completed within an available weather window.

Likewise, CN 101545462 describes a steel-concrete gravity type base structure for an offshore wind turbine. A tubular steel monopile-like column surmounts a steel-reinforced concrete base, the arrangement being chosen to lower the centre of gravity of the assembly. However, with minimal embedding in the seabed soil, stability remains a challenge. In this respect, the base is provided with holes to facilitate grouting and placement of anchor rods to resist overturning. Also, the weight of the base makes transportation, lifting and installation challenging.

CN 208763050 describes a similar gravity caisson foundation for an offshore wind turbine, with additional rock dumps for scour protection. In this case, however, the foundation is predominantly of prefabricated reinforced concrete construction. Whilst the resulting pre-ballasting weight may be helpful for stability, it adds to the difficulty of transportation, lifting and installation.

EP 2864550 also describes the placement of granular elements such as rocks around a subsea foundation for scour protection. However, in that case, the foundation is a standard gravity base.

KR 101240615 discloses a monopile-like column mounted on a suction caisson. When the caisson has been embedded by suction, ballast rocks are dumped inside the column to stabilise the caisson. This requirement limits design options for the column; also, the disadvantages of a suction foundation remain.

WO 2014/060650 discloses a foundation that comprises rings of open cells defining an open structure. The open structure allows the foundation to be lowered through water with minimal resistance, but requires a concrete base to be cast at the seabed to enable the foundation to be stabilised.

Further prior art background is disclosed in EP 3176329, US 10011968, EP 3259404, CN 108824473, CN 204645074U, CN 208917861U, CN 204803907U, CN 205000355U. JP 2006322400, EP 1777348, KR 101383159, WO 2011/147592, EP 2559814, CN 104818727, CN 102444140, CN 204059342, KR 101445131 and CN 204645074U.

Additional prior art background is provided by:
https://www.carbontrust.com/resources/offshore-wind-industry-review-of-gravity-based-structures
https://www.icorr.org/wp-content/uploads/2017/06/CEDWorkingDay2018Presentation_RBewell.pdf
Esteban et al, Gravity-Based Foundations in the Offshore Wind Sector, Journal of Marine Science, 12 March 2019.

Against this background, the invention provides a subsea foundation that comprises a caisson and a column that is co-operable with or fixed to the caisson. The caisson is at least predominantly of steel, and has: a base; a peripheral wall upstanding from the base defining at least one open-topped compartment in which ballast can be deposited onto the base; and a peripheral skirt extending below the base, the skirt being an integral downward extension of the peripheral wall.

The base and the peripheral wall are formed of substantially flat steel plates.

In this respect, the caisson may have a polyhedral shape in plan view and the peripheral wall may have facets corresponding to sides of the polyhedral shape.

In some embodiments, the caisson comprises a tubular socket that is telescopically co-operable with the column. The socket may extend through the base or may terminate at the base. The column may extend through the base or may rest on the base.

Radially-extending ribs may be joined to the base and the peripheral wall, those ribs suitably extending radially inwardly from the peripheral wall. The ribs are also preferably formed of substantially flat steel plates. Where the caisson comprises a socket, the ribs may join the peripheral wall to the socket. Conversely, where the caisson does not have a socket, the ribs may join the peripheral wall directly to the column.

The foundation may further comprise a grouting system that is configured to inject grout beneath the base and/or a suction system that is configured to pump out water from beneath the base.

Ballast material may be deposited within the or each compartment. A berm of granular material may be deposited outside and adjoining the peripheral wall. Conveniently, the berm may be of the same granular material as the ballast material within the or each compartment.

The inventive concept embraces an offshore wind turbine installation that comprises a foundation of the invention and a wind turbine surmounting the column of that foundation.

The inventive concept also enables and extends to methods of installing a subsea foundation that supports an upright column. One such method, in which the foundation comprises the column, comprises: lifting a caisson from a surface vessel or barge, the caisson comprising a tubular socket that is telescopically co-operable with the column; lowering the lifted caisson to the seabed, and then lowering the column into engagement with the tubular socket of the caisson; and depositing ballast material into the caisson, for example in at least one net or bag.

A related method of installing a subsea foundation that supports an upright column comprises: lifting a caisson from a surface vessel or barge, the caisson having a base and being co-operable with or fixed to the column; lowering the lifted caisson to the seabed; depositing ballast material into the caisson and onto the base of the caisson; and embedding a peripheral skirt of the caisson in the seabed.

To mitigate the effects of wave action, the caisson can be tilted away from a horizontal plane when being lowered through a surface splash zone.

The caisson can be lowered to the seabed location with the column already fixed to the caisson or the column can be lowered into engagement with the caisson previously lowered to the seabed location. In the latter case, the ballast material may be deposited before or after the column is lowered into engagement with the caisson.

Grout may be injected between the caisson and the seabed, for example to strengthen and level the seabed. Water may be pumped out from beneath the caisson to create suction between the caisson and the seabed. Where granular material is deposited to form a berm outside and adjoining a peripheral wall of the caisson, this may be performed in the same operation as deposition of ballast material into the caisson. A peripheral skirt of the caisson may be embedded in the seabed.

The invention provides a novel solution for wind turbine foundations offshore. Embodiments of the invention, to be described, comprise a central steel column substructure that is analogous to a monopile but does not necessarily penetrate the seabed. The substructure is located on top of, or extends above, a steel gravity caisson.

The invention eschews the self-buoyant approach that has recently been favoured in the industry, recognising that the availability of offshore construction cranes enables a lift-installed solution. In this respect, a steel caisson is lighter than a concrete gravity foundation, which makes the foundation easier to lift and to install. Thus, the foundation or its components can be carried on the deck of a vessel or a barge and lifted from the deck into the water, using a heavy-lift marine crane. Transportation to the installation site on the deck in this way is less weather-dependent than towing a self-buoyant structure.

Where the base of the caisson is lowered through the splash zone near the sea surface, the caisson could experience significant wave slam loading. In that case, there is an option to incline the lift so that the base of the caisson is inclined relative to the horizontal and therefore enters the water progressively and gradually, exposing a relatively small area of the structure to wave action at any one time.

The solution of the invention is an improvement over existing monopile and gravity foundation designs because it gives greater flexibility for transportation, lifting and installation. Another advantage of this approach is that there is no need for a separate transition piece at the top of the column adjoining the wind turbine above.

The caisson is apt to be fabricated from stiffened steel plates, using construction techniques like those used conventionally to build barges or ships. If flat plates are used, the caisson may have a polygonal, for example octagonal, shape in plan view rather than a circular or round shape.

The caisson may have no roof and may comprise frame members or ribs extending radially from the column. This forms open-topped cells into which ballast such as high-density rock ballast can be placed after installation to add stability. In addition to allowing easy access to dump ballast into the caisson, the open-topped cells ease removal of the ballast upon eventual decommissioning.

Optionally, the caisson may have short skirts on its underside. Such skirts may improve sliding resistance, help to control pore pressure under the caisson, help to improve scour resistance and avoid or minimise the need for seabed preparation.

Seabed preparation may be reduced or avoided by using an under-base grouting system to help to level the seabed. Such a system could be used in combination with, or independently of, a water evacuation system to drain water from within a skirt to level the foundation.

The invention contemplates different ways of connecting the central column to the caisson. In one approach, the column could be built in to the caisson at a fabrication yard. In that case, the entire structure could be transported, lifted and lowered into position offshore as a single assembly in a single lift.

In another approach, the caisson could define a sleeve into which the column can be placed or inserted offshore. In that case, the column and caisson are transported as two parts. The column can therefore be transported in a horizontal orientation and then upended before being lowered into the water. This is a good solution for markets, like the US, where bridges located between construction and marshalling facilities and the offshore installation site present a challenge due to air-gap restrictions. The caisson is lifted and lowered into place on the seabed first. The column is then lifted and lowered into engagement with the caisson and is levelled and grouted into place.

Thus, the invention provides low-cost gravity foundation solutions for an offshore wind turbine that can be installed in relatively deep water using a heavy-lift vessel. The invention provides a less costly and simpler-to-install alternative to a drilled and grouted pile.

Embodiments of the invention provide a subsea foundation, the foundation comprising: a caisson comprising a lateral skirt and a plate, wherein a column is mounted on or through the caisson and wherein ribs connect the plate and the sides of the column; ballast deposited between the ribs of the caisson; and granular material deposited on soil around the lateral skirt of the caisson for scour protection.

In plan view, the caisson may be polyhedral, for example octagonal, or cylindrical. The lateral skirt of the caisson may extend above and/or below the plate, taking the form of a peripheral wall if extending above the plate.

The ribs may suitably extend inside a volume defined by the plate, the lateral skirt or wall and the column. However, a volume below the plate may be used as a suction chamber, whereby the caisson may have some of the characteristics of a suction caisson.

The ballast and the granular material may, for example, be rock. The ballast and the granular material, which may conveniently be dumped in a single operation, could be enclosed within nets or a porous bags.

In summary, a subsea foundation of the invention comprises a caisson that is at least predominantly of steel and is preferably made mainly of flat steel plates, using conventional shipyard fabrication techniques. The caisson is lightweight, hence being transportable aboard an installation vessel rather than requiring towing. The caisson can be lifted onto and off the vessel using a marine crane.

The caisson has a base and a peripheral wall upstanding from the base to define at least one open-topped compartment in which ballast can be deposited onto the base after the caisson is lowered to the seabed.

A column analogous to a monopile for a wind turbine is co-operable with or fixed to the caisson. The column may be lowered with the caisson or lowered after the caisson and united with the caisson on the seabed. For the latter purpose, the caisson may comprise a tubular socket that receives the column telescopically.

In order that the invention may be more readily understood, reference will now be made, by way of example, to the accompanying drawings, in which:
Figure 1 is a side view of an offshore wind turbine installation comprising a subsea foundation of the invention;
Figure 2 is a side view of a caisson being part the foundation shown in Figure 1;
Figure 3 is a side view of a column being another part of the foundation shown in Figure 1;
Figure 4 is a top plan view of the caisson shown in Figure 3;
Figure 5 is a bottom plan view of the caisson shown in Figure 3;
Figure 6 is a side view of the caisson of Figure 3 being placed on the seabed;
Figure 7 is a side view of the column of Figure 2 being inserted into the caisson pre-installed on the seabed, in accordance with Figure 6, to form a subsea foundation assembly;
Figure 8 is a side view of the foundation assembly after placing rock into the caisson to ballast the assembly and after placing additional rock onto the seabed around the caisson as an anti-scour measure;
Figure 9 is a schematic side view of grout being injected into the underside of a caisson of Figure 3;
Figure 10 is a schematic side view showing water being evacuated from the underside of the caisson of Figure 3, creating an underpressure that embeds a skirt of the caisson into the seabed soil;
Figure 11 is a side view of a variant of the foundation shown in Figure 1, in which the column and the caisson are preassembled before installation;
Figure 12 is a side view that shows the foundation of Figure 11 being lifted during installation offshore;
Figure 13 is a side view that illustrates an alternative offshore lifting technique being used with the foundation of Figure 11, shown here being lowered through the surface of the sea;
Figure 14 is a side view of a further variant of the foundation shown in Figure 11; and
Figure 15 is a schematic plan view of an installation vessel carrying a plurality of caissons and column to an installation site.

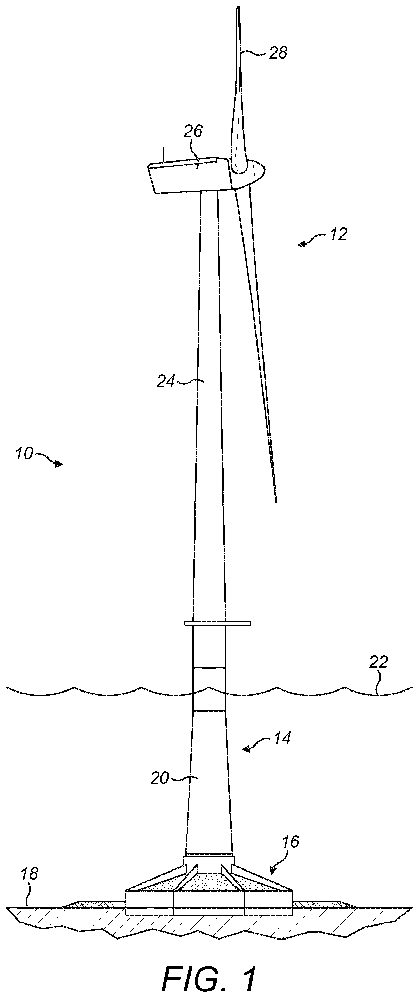

Referring firstly to Figure 1 of the drawings, an offshore wind turbine installation 10 comprises a conventional wind turbine 12 atop a subsea foundation 14 of the invention. The foundation 14 comprises an open-topped caisson 16 that lies on the seabed 18 and a column 20 that extends upwardly from the caisson 16 to protrude above the surface 22. A mast 24 of the wind turbine 12 surmounts the column 20 in coaxial relation, extending to a nacelle 26 atop the mast 24 that supports a rotor 28.

In this example, the caisson 16 and the column 20 are each fabricated of steel components, or predominantly steel components, welded together.

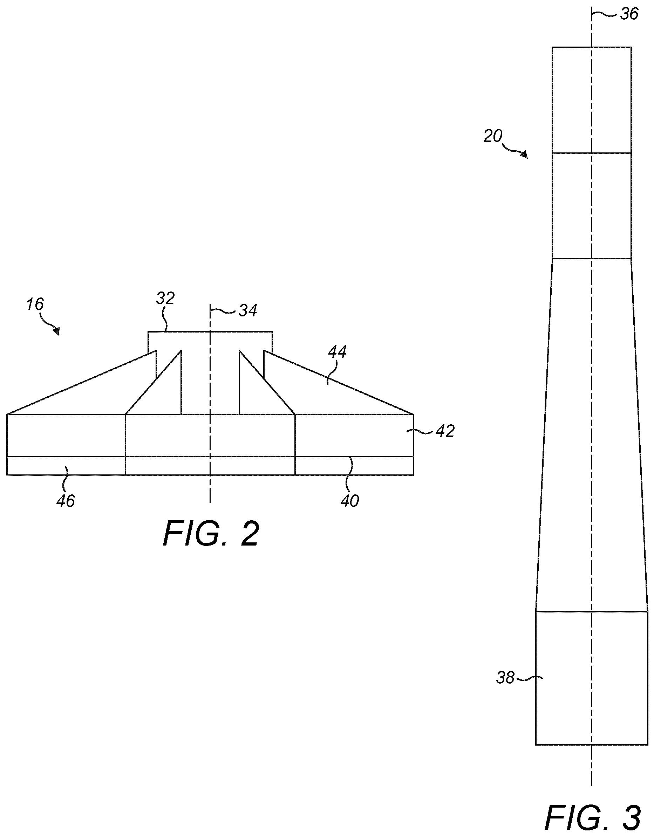

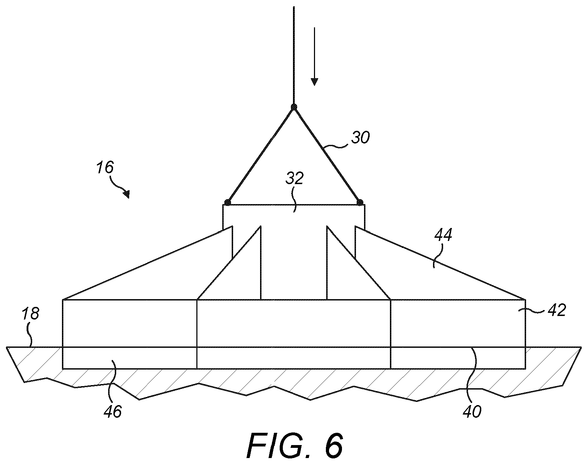

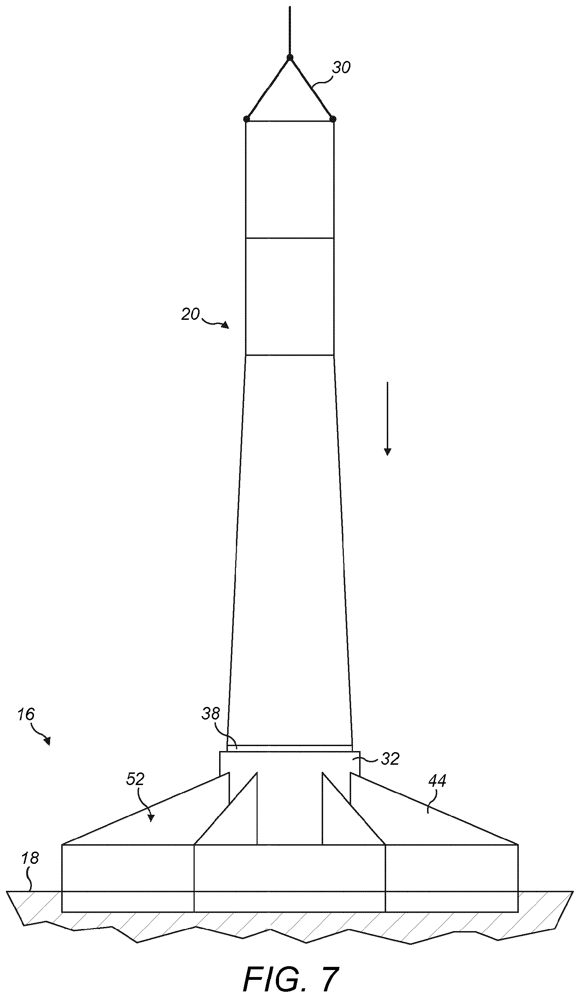

Figures 2 to 8 of the drawings show a first embodiment of the invention in which the caisson 16 and the column 20 are separate components that are shown, respectively, in Figures 2 and 3. Thus, the caisson 16 and the column 20 can be transported to an installation site in a compact disassembled form, for example lying together on the deck of a vessel or barge or separately on different vessels or barges. The caisson 16 and the column 20 can then be assembled together during installation to complete the foundation 14. In this respect, the caisson 16 is installed on the seabed 18 first as shown in Figure 6 and the column 20 is then attached to the pre-installed caisson 16 as shown in Figure 7, each being lifted and lowered on lifting tackle 30 suspended from a conventional marine crane, not shown.

With reference to Figures 2, 4 and 5, the caisson 16 comprises a central tubular socket 32 that is rotationally symmetrical about an upright central longitudinal axis 34. The column 20 shown in Figure 3 is also rotationally symmetrical about a central longitudinal axis 36 and has a tubular lower end portion 38 whose outer diameter is a close sliding telescopic fit within the inner diameter of the socket 32. When the lower end portion 38 of the column 20 is received within the socket 32 of the preinstalled caisson 16 as shown in Figure 7, it will be apparent that the axes 34, 36 are brought into mutual coaxial alignment. Once engaged in the socket 32, the end portion 38 of the column 20 may be fixed to the socket 32 by grouting, bolting or other fixings.

The caisson 16 further comprises a substantially flat base 40 that lies in a plane intersected orthogonally by the central longitudinal axis 34. The socket 32 may extend downwardly through the base 40 or may terminate level with the base 40.

The base 40 extends outwardly from the socket 32 to terminate at an outer edge in a peripheral wall 42 upstanding orthogonally from the base 40. Ribs 44 extend radially from the socket 32 with mutual angular spacing about the central longitudinal axis 34 to join the socket 32 to the peripheral wall 42. In this example, the ribs 44 are substantially flat and lie in respective planes that contain the central longitudinal axis 34.

The radially inner edge of each rib 44 adjoins the socket 32 and so extends vertically, as does the radially outer edge of each rib 44 that adjoins the peripheral wall 42. Conversely, the bottom edge of each rib 44 adjoins the base 40 and so extends horizontally. On the other hand, the top edge of each rib 44 is inclined downwardly away from the socket 32 to the top of the peripheral wall 42, which is lower than the top of the socket 32 and therefore closer to the plane of the base 40.

Collectively, the ribs 44 serve as buttresses that brace the socket 32 and therefore the column 20 when engaged with the socket 32, hence transferring loads between the socket 32 and the seabed 18 via the base 40. The ribs 44 also brace and buttress the peripheral wall 42.

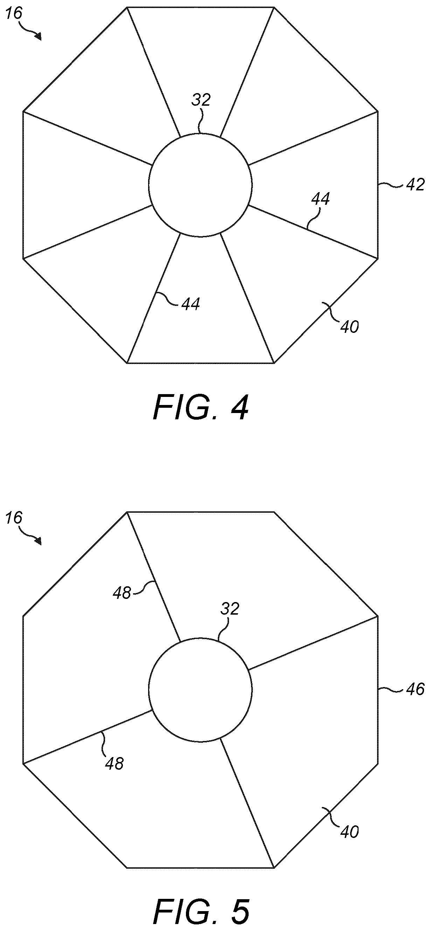

In this example, as best appreciated in Figure 4, there are eight ribs 44 and the base 40 is octagonal in plan view, with the sides of the octagon being defined between neighbouring outer edges of the ribs 44. The peripheral wall 42 comprises facets that are aligned with respective sides of the octagon. The base 40 could have other polygonal shapes depending on the number of ribs or could have a non-polygonal shape such as a circle. However, it is simpler, and hence preferred, to construct at least the base 40, the peripheral wall 42 and the ribs 44 of the caisson 16 from flat plates as shown.

The underside of the base 40 shown in Figure 5 has a circumferentially-continuous peripheral skirt 46 at its outer edge. The skirt 46 could be a downward continuation of the peripheral wall 42 above the base 40 or could instead be an additional component that is fixed to the bottom edge of the peripheral wall 42.

The underside of the base 40 is further divided by radially-extending flanges 48 that extend from the socket 32 to the peripheral skirt 46. In this example, there are four flanges 48 aligned with alternating ribs 44 above the base 40. There could be more flanges 48, for example aligned with each rib 44, fewer flanges 48 or indeed no flanges 48. Where present, flanges 48 need not be aligned with the ribs 44 but where the flanges 48 are aligned with respective ribs 44, each flange 48 could be a downward continuation of a rib 44 above the base 40 or could instead be an additional component that is fixed to the bottom edge of the rib 44.

The base 40 could be a single uninterrupted plate or could be divided into separate plates disposed between the ribs 44 and/or the flanges 48.

When the caisson 16 is lowered onto the seabed 18, the skirt 46 and the flanges 48 embed into the seabed 18 as shown in Figure 6 to improve engagement between the caisson 16 and the seabed 18.

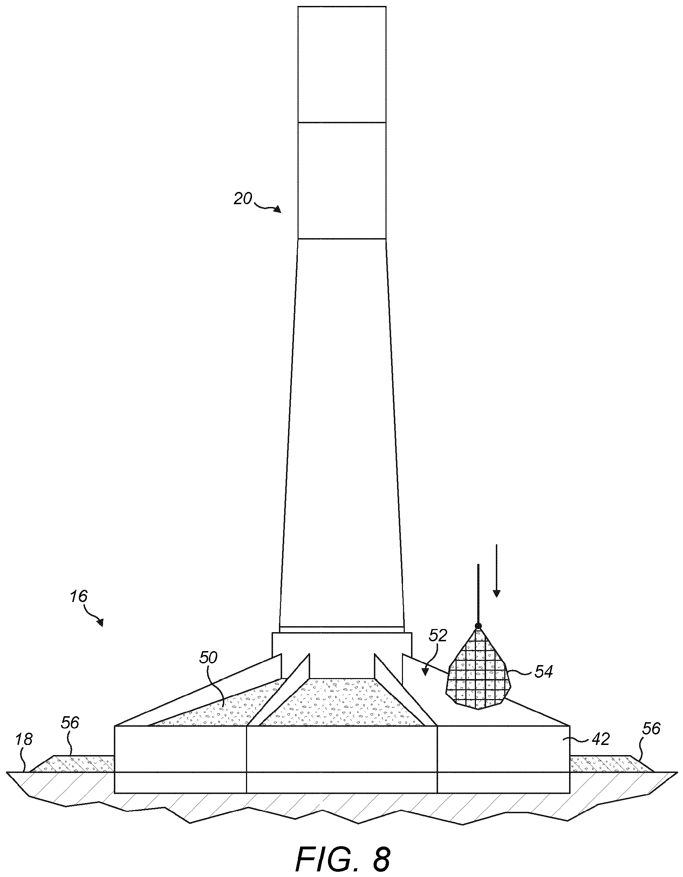

Before or after engaging the column 20 with the socket 32 of the caisson 16, the caisson 16 may be stabilised by placing ballast material 50 onto the base 40 as shown in Figure 8. Conveniently, this may be achieved by lowering or dumping the ballast material 50 into the open-topped compartments 52 that are defined between the socket 32, the peripheral wall 42 and the ribs 44. Accurate placement may be helped by lowering discrete amounts of the ballast material 50 into the compartments 52 in nets or perforated bags 54 as shown.

Granular material is placed on the seabed 18 around the caisson 16 in an annular berm 56 that adjoins the outer side of the peripheral wall 42 to protect the foundation 14 against scouring action. The granular material of the berm 56 could be the same as the ballast material 50, in which case the berm 56 and the ballast material 50 could conveniently be deposited in a single operation. For example, some material dropped from above the caisson 16 may fall on the inner side of the peripheral wall 42, hence falling into the compartments 52, and some of the same material may fall on the outer side of the peripheral wall 42 to form the berm 56.

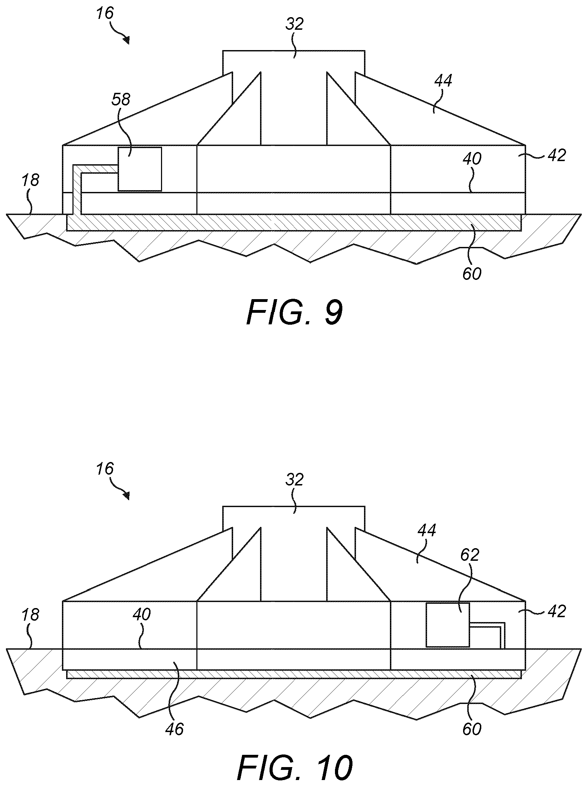

Optionally, the caisson 16 may be grouted, levelled and/or embedded in the seabed 18. Any of those operations may be performed on the caisson 16 before or after the column 20 is fixed to the caisson 16. In this respect, Figure 9 shows a grouting system 58 comprising a pump for injecting a layer of grout 60 through the base 40 into a void between the base 40 and the seabed 18. Conversely, Figure 10 shows a suction system 62 comprising a pump for evacuating water from the underside of the caisson 16, creating an underpressure that embeds the skirt 46 of the caisson 16 further into the soil of the seabed 18 as shown. Thus, the skirt 46 encloses and seals a suction chamber defined between the base 40 and the seabed 18. For this purpose, the base 40 and the skirt 46 are each substantially continuous and closed.

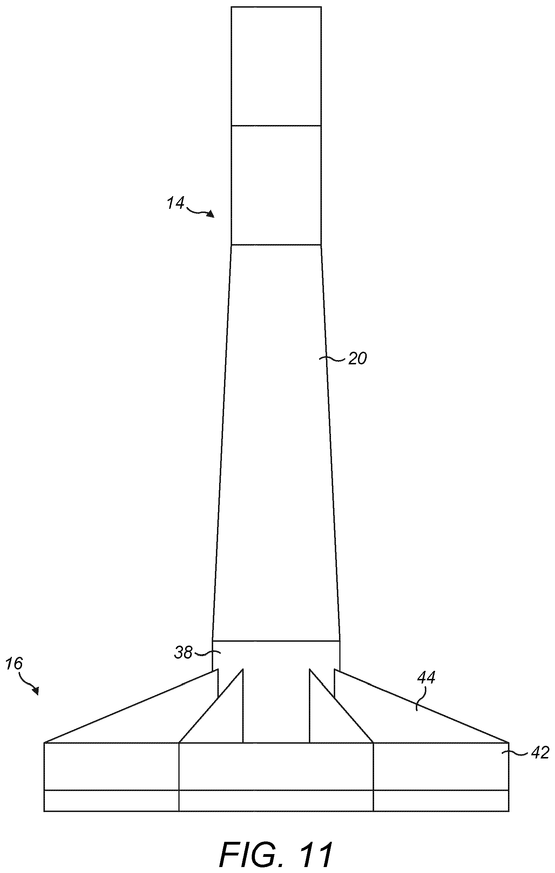

It is not essential for the caisson 16 and the column 20 to be separate components, or only to be assembled together on the seabed 18. For example, Figures 11 to 13 show a variant of the foundation 14 in which the caisson 16 and the column 20 are fabricated together as a single assembly. Like numerals are used for like features. In this variant, the lower end portion 38 of the column 20 is not received within a socket 32, which has been omitted. Instead, the lower end portion 38 of the column 20 is joined directly to the ribs 44 that extend from the column 20 to the peripheral wall 42.

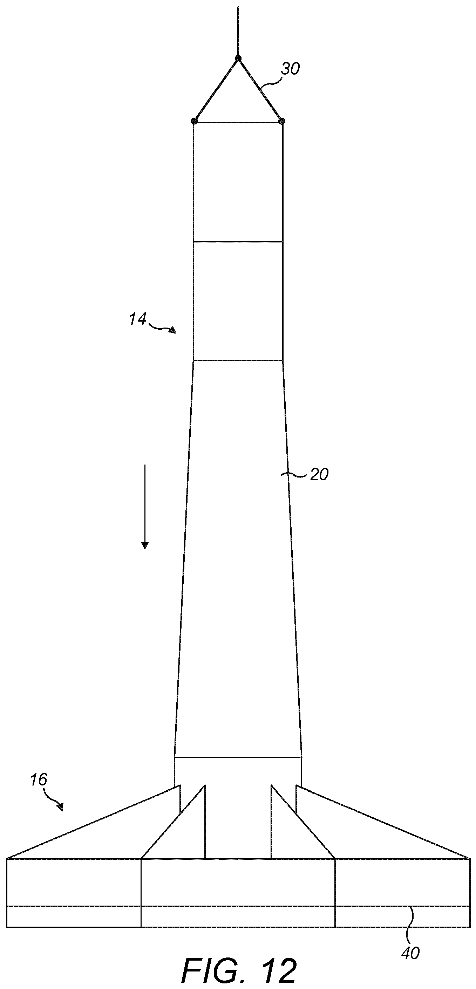

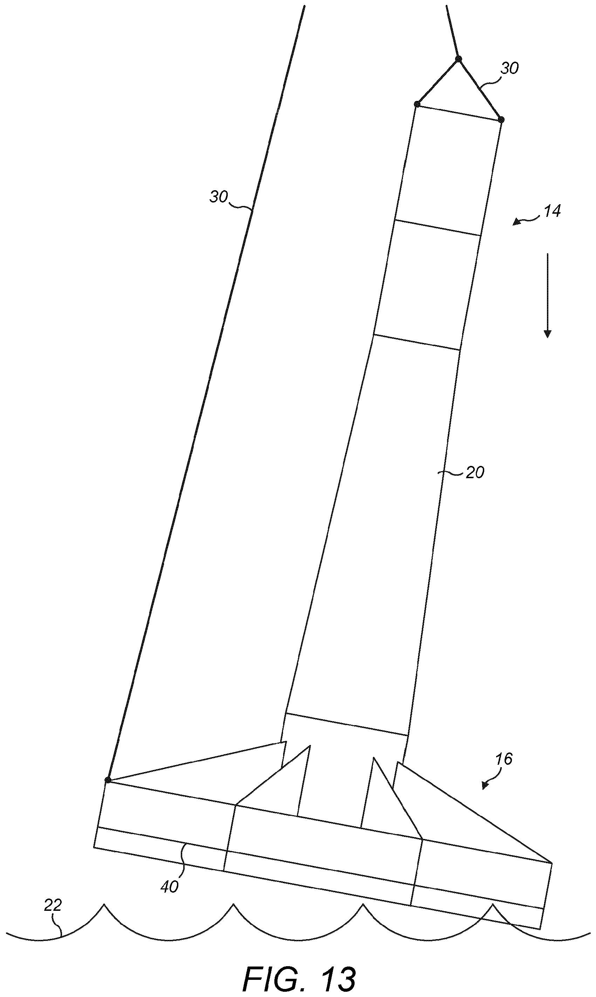

Figures 12 and 13 show the foundation 14 comprising the caisson 16 and the column 20 being lifted and lowered together. In Figure 12, lifting tackle 30 fixed to the top of the column 20 carries the weight of the foundation 14, which hangs with the column 20 in a vertical orientation and with the base 40 of the caisson 16 therefore in a horizontal orientation.

In contrast, in Figure 13, the lifting tackle 30 additionally suspends the caisson 16 from one side. Thus, the foundation 14 is suspended in an inclined orientation with the base 40 of the caisson 16 inclined relative to the horizontal. The foundation 14 is lowered with that inclination through the splash zone at the surface 22 of the sea. It will be noted here that when the inclined base 40 of the caisson encounters the surface 22, only a small area of the base 40 is exposed to wave slam forces at any one time. When the base 40 of the caisson 16 has traversed the splash zone fully, the foundation 14 is returned to an upright orientation on or before landing the caisson 16 on the seabed 18.

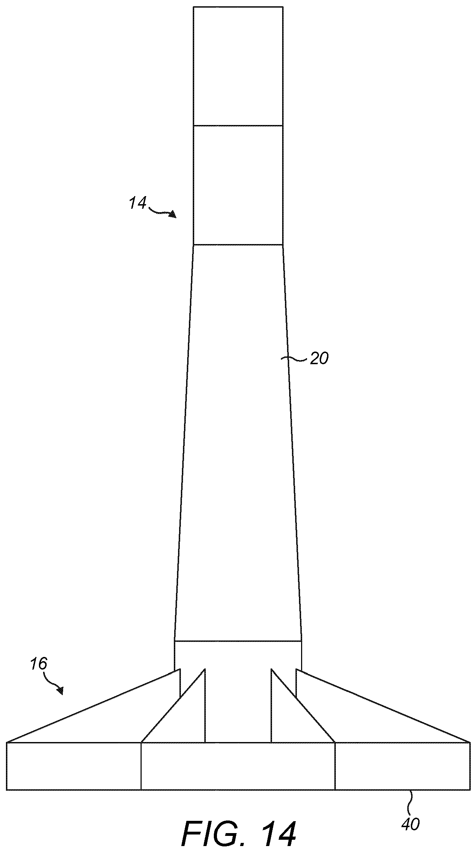

Figure 14 shows a variant of the foundation 14 in which the caisson 16 has no skirt 46 or flanges 48, and the column 20 and/or the socket 32 does not extend downwardly through the base 40. Consequently, the base 40 defines the bottom of the caisson 16. Whilst this variant is shown in the context of an integrated caisson 16 and column 20 like that shown in Figures 11 to 13, it will be apparent to the skilled reader that a similar arrangement could be used in the separate caisson 16 like that shown in Figures 1 to 10, which may be preinstalled on the seabed 18 before attaching a column 20.

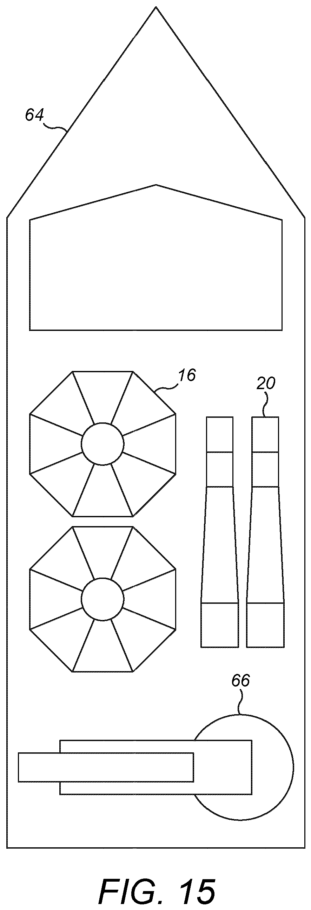

Finally, Figure 15 shows an implementation of the arrangement shown in Figures 2 to 8 in which an installation vessel 64 is shown carrying two caissons 16 and two columns 20 to an installation site to assemble two turbines there. In this example, the installation vessel 64 includes a crane 66 that is capable of lifting those foundation components into the sea. In other examples, a crane of a different vessel may be used instead. It is also possible to transport the pre-assembled foundation of Figures 11 to 14 on board the installation vessel 64, typically with the column 20 upright.

More generally, it will be apparent that features described in some embodiments could be used in other embodiments. For example, the grouting system of Figure 9 or the pumping system of Figure 10 could be used with the integrated caisson and column of Figures 11 to 13. Similarly, the variant of Figure 14 could be lowered into the sea in an inclined orientation like that shown in Figure 13.

Whilst the grouting system of Figure 9 and the pumping system of Figure 10 are shown onboard the caisson, those systems could instead comprise at least some equipment located at or above the surface, on the seabed or supported in the water column between the surface and the seabed.

Many other variations are possible within the inventive concept. For example, the full height of the socket may extend upwardly from the base and the base may extend across the bottom of the socket. Consequently, the bottom of the column can rest on the base. However, the column need not terminate at the caisson or rest on the base. The column could instead extend downwardly through the caisson and through an opening in the base to penetrate the seabed beneath the caisson to some extent, like a monopile.

## Claims

1. A subsea foundation (14), comprising:
a caisson (16), at least predominantly of steel, having:
a base (40);
a peripheral wall (42) upstanding from the base (40) defining at least one open-topped compartment (52) in which ballast (50) can be deposited onto the base (40); and
a peripheral skirt (46) extending below the base (40), the skirt (46) being an integral downward extension of the peripheral wall (42); and
a column (20) co-operable with or fixed to the caisson (16);
wherein the base (40) and the peripheral wall (42) are formed of substantially flat steel plates.

2. The foundation (14) of Claim 1, wherein the caisson (16) has a polyhedral shape in plan view and the peripheral wall (42) has facets corresponding to sides of the polyhedral shape.

3. The foundation (14) of any preceding claim, wherein the caisson (16) comprises a tubular socket (32) that is telescopically co-operable with the column (20).

4. The foundation (14) of Claim 3, wherein the socket (32) extends through the base (40).

5. The foundation (14) of Claim 3, wherein the socket (32) terminates at the base (40).

6. The foundation (14) of any preceding claim, comprising radially-extending ribs (44) joined to the base (40) and the peripheral wall (42), extending radially inwardly from the peripheral wall (42).

7. The foundation (14) of Claim 6 when dependent on any of Claims 3 to 5, wherein the ribs (44) join the peripheral wall (42) to the socket (32).

8. The foundation (14) of Claim 6 when not dependent on any of Claims 3 to 5, wherein the ribs (44) join the peripheral wall (42) to the column (20).

9. The foundation (14) of any of Claims 6 to 8, wherein the ribs (44) are formed of substantially flat steel plates.

10. The foundation (14) of any preceding claim, wherein the column (20) extends through the base (40).

11. The foundation (14) of any of Claims 1 to 9, wherein the column (20) rests on the base (40).

12. The foundation (14) of any preceding claim, further comprising a grouting system (58) that is configured to inject grout (60) beneath the base (40).

13. The foundation (14) of any preceding claim, further comprising a suction system (62) that is configured to pump out water from beneath the base (40).

14. The foundation (14) of any preceding claim, further comprising ballast material (50) deposited within the or each compartment (52).

15. The foundation (14) of any preceding claim, further comprising a berm (56) of granular material deposited outside and adjoining the peripheral wall (42).

16. The foundation (14) of Claim 15, wherein the berm (56) is of the same granular material as the ballast material (50) within the or each compartment (52).

17. An offshore wind turbine installation (10) comprising the foundation (14) of any preceding claim and a wind turbine (12) surmounting the column (20).

18. A method of installing a subsea foundation (14) that comprises and supports an upright column (20), the method comprising:
lifting a caisson (16) from a surface vessel (64) or barge, the caisson (16) comprising a tubular socket (32) that is telescopically co-operable with the column (20);
lowering the lifted caisson (16) to the seabed (18), and then lowering the column (20) into engagement with the tubular socket (32) of the caisson (16); and
depositing ballast material (50) into the caisson (16).

19. A method of installing a subsea foundation (14) that supports an upright column (20), the method comprising:
lifting a caisson (16) from a surface vessel (64) or barge, the caisson (16) having a base (40) and being co-operable with or fixed to the column (20);
lowering the lifted caisson (16) to the seabed (18);
depositing ballast material (50) into the caisson (16) and onto the base (40) of the caisson (16); and
embedding a peripheral skirt (46) of the caisson (16) in the seabed (18).

20. The method of Claim 19, comprising lowering the caisson (16) with the column (20) fixed to the caisson (16).

21. The method of Claim 19, comprising lowering the column (20) into engagement with the caisson (16) previously lowered to the seabed location.

22. The method of Claim 18 or Claim 21, comprising depositing the ballast material (50) before lowering the column (20) into engagement with the caisson (16).

23. The method of any of Claims 18 to 22, comprising depositing the ballast material (50) in at least one net or bag (54).

24. The method of any of Claims 18 to 23, further comprising depositing granular material to form a berm (56) outside and adjoining a peripheral wall (42) of the caisson (16).

25. The method of Claim 24, comprising depositing the ballast material (50) into the caisson (16) and the granular material outside the caisson (16) in a single operation.

26. The method of any of Claims 18 to 25, comprising pumping out water from beneath the caisson (16).

27. The method of any of Claims 18 to 26, comprising tilting the caisson (16) away from a horizontal plane when lowering the caisson (16) through a surface splash zone.

## Patentansprüche

1. Unterseefundament (14), umfassend:
einen Caisson (16), mindestens vorwiegend aus Stahl, der Folgendes aufweist:
einen Boden (40);
eine Umfangswand (42), die von dem Boden (40) hochsteht und mindestens ein oben offenes Fach (52) definiert, in dem Ballast (50) auf den Boden (40) abgelagert werden kann; und
eine Umfangsschürze (46), die sich unter dem Boden (40) erstreckt, wobei die Schürze (46) eine Verlängerung nach unten der Umfangswand (42) und damit einstückig ausgebildet ist; und
eine Säule (20), die mit dem Caisson (16) zusammenwirken kann oder daran befestigt ist;
wobei der Boden (40) und die Umfangswand (42) aus im Wesentlichen flachen Stahlplatten gebildet sind.

2. Fundament (14) nach Anspruch 1, wobei der Caisson (16) in der Draufsicht eine vielflächige Form aufweist und die Umfangswand (42) Seiten der vielflächigen Form entsprechende Facetten aufweist.

3. Fundament (14) nach einem der vorangehenden Ansprüche, wobei der Caisson (16) eine röhrenförmige Hülse (32) umfasst, die mit der Säule (20) teleskopisch zusammenwirken kann.

4. Fundament (14) nach Anspruch 3, wobei sich die Hülse (32) durch den Boden (40) hindurch erstreckt.

5. Fundament (14) nach Anspruch 3, wobei die Hülse (32) an dem Boden (40) endet.

6. Fundament (14) nach einem der vorangehenden Ansprüche, umfassend sich radial erstreckende Rippen (44), die mit dem Boden (40) und der Umfangswand (42) verbunden sind und sich von der Umfangswand (42) radial nach innen erstrecken.

7. Fundament (14) nach Anspruch 6, wenn abhängig von einem der Ansprüche 3 bis 5, wobei die Rippen (44) die Umfangswand (42) mit der Hülse (32) verbinden.

8. Fundament (14) nach Anspruch 6, wenn nicht abhängig von einem der Ansprüche 3 bis 5, wobei die Rippen (44) die Umfangswand (42) mit der Säule (20) verbinden.

9. Fundament (14) nach einem der Ansprüche 6 bis 8, wobei die Rippen (44) aus im Wesentlichen flachen Stahlplatten gebildet sind.

10. Fundament (14) nach einem der vorangehenden Ansprüche, wobei sich die Säule (20) durch den Boden (40) hindurch erstreckt.

11. Fundament (14) nach einem der Ansprüche 1 bis 9, wobei die Säule (20) auf dem Boden (40) steht.

12. Fundament (14) nach einem der vorangehenden Ansprüche, ferner umfassend ein Vergusssystem (58), dass dazu konfiguriert ist, Vergussmasse (60) unter den Boden (40) einzuspritzen.

13. Fundament (14) nach einem der vorangehenden Ansprüche, ferner umfassend ein Saugsystem (62), dass dazu konfiguriert ist, Wasser von unter den Boden (40) abzupumpen.

14. Fundament (14) nach einem der vorangehenden Ansprüche, ferner umfassend Ballastmaterial (50), das in dem oder jedem Fach (52) abgelagert ist.

15. Fundament (14) nach einem der vorangehenden Ansprüche, ferner umfassend eine Berme (56) aus körnigem Material, das außerhalb der Umfangswand (42) abgelagert ist und an diese angrenzt.

16. Fundament (14) nach Anspruch 15, wobei die Berme (56) aus dem gleichen körnigen Material besteht wie das Ballastmaterial (50) in dem oder jedem Fach (52).

17. Offshore-Windturbinenanlage (10), umfassend das Fundament (14) nach einem der vorangehenden Ansprüche, und eine die Säule (20) überragende Windturbine (12).

18. Verfahren zum Installieren eines Unterseefundaments (14), das eine aufrechte Säule (20) umfasst und trägt, wobei das Verfahren Folgendes umfasst:
Heben eines Caissons (16) von einem Überwasserschiff (64) oder einer Überwasserschute, wobei der Caisson (16) eine röhrenförmige Hülse (32) umfasst, die mit der Säule (20) teleskopisch zusammenwirken kann;
Absenken des gehobenen Caissons (16) auf den Meeresboden (18) und dann Absenken der Säule (20) in einen Eingriff mit der röhrenförmigen Hülse (32) des Caissons (16); und
Ablagern von Ballastmaterial (50) in den Caisson (16).

19. Verfahren zum Installieren eines Unterseefundaments (14), das eine aufrechte Säule (20) trägt, wobei das Verfahren Folgendes umfasst:
Heben eines Caissons (16) von einem Überwasserschiff (64) oder einer Überwasserschute, wobei der Caisson (16) einen Boden (40) umfasst und mit der Säule (20) zusammenwirken kann oder daran befestigt ist;
Absenken des gehobenen Caissons (16) auf den Meeresboden (18);
Ablagern von Ballastmaterial (50) in den Caisson (16) und auf den Boden (40) des Caissons (16); und
Einbetten einer Umfangsschürze (46) des Caissons (16) in den Meeresboden (18).

20. Verfahren nach Anspruch 19, umfassend das Absenken des Caissons (16) mit der an dem Caisson (16) befestigten Säule (20).

21. Verfahren nach Anspruch 19, umfassend das Absenken der Säule (20) in einen Eingriff mit dem zuvor auf den Ort am Meeresboden abgesenkten Caisson (16).

22. Verfahren nach Anspruch 18 oder Anspruch 21, umfassend das Ablagern des Ballastmaterials (50) vor dem Absenken der Säule (20) in den Eingriff mit dem Caisson (16).

23. Verfahren nach einem der Ansprüche 18 bis 22, umfassend das Ablagern des Ballastmaterials (50) in mindestens ein Netz oder einen Sack (54).

24. Verfahren nach einem der Ansprüche 18 bis 23, ferner umfassend das Ablagern von körnigem Material, um eine Berme (56) außerhalb einer Umfangswand (42) des Caissons (16) und an diese angrenzen zu bilden.

25. Verfahren nach Anspruch 24, umfassend das Ablagern des Ballastmaterials (50) in den Caisson (16) und des körnigen Materials außerhalb des Caissons (16) in einem einzigen Ablauf.

26. Verfahren nach einem der Ansprüche 18 bis 25, umfassend das Abpumpen von Wasser von unterhalb des Caissons (16).

27. Verfahren nach einem der Ansprüche 18 bis 26, umfassend das Kippen des Caissons (16) von einer Horizontalebene weg beim Absenken des Caissons (16) durch einen Oberflächenspritzwasserbereich.

## Revendications

1. Fondation sous-marine (14), comprenant :
un caisson (16), au moins majoritairement en acier, comportant :
une base (40) ;
une paroi périphérique (42) dressée à partir de la base (40), définissant au moins un compartiment à sommet ouvert (52) dans lequel du ballast (50) peut être déposé sur la base (40) ; et
une jupe périphérique (46) s'étendant sous la base (40), la jupe (46) étant un prolongement vers le bas de la paroi périphérique (42) faisant partie intégrante de celle-ci ; et
une colonne (20) propre à coopérer avec le caisson (16) ou fixée à celui-ci ;
la base (40) et la paroi périphérique (42) étant constituées de plaques d'acier sensiblement planes.

2. Fondation (14) selon la revendication 1, dans laquelle le caisson (16) présente une forme polyédrique dans une vue en plan et la paroi périphérique (42) comporte des facettes correspondant à des côtés de la forme polyédrique.

3. Fondation (14) selon l'une quelconque des revendications précédentes, dans laquelle le caisson (16) comprend une douille tubulaire (32) qui est propre à coopérer de manière télescopique avec la colonne (20).

4. Fondation (14) selon la revendication 3, dans laquelle la douille (32) s'étend à travers la base (40).

5. Fondation (14) selon la revendication 3, dans laquelle la douille (32) se termine au niveau de la base (40).

6. Fondation (14) selon l'une quelconque des revendications précédentes, comprenant des nervures (44) s'étendant radialement, raccordées à la base (40) et à la paroi périphérique (42), s'étendant radialement vers l'intérieur à partir de la paroi périphérique (42).

7. Fondation (14) selon la revendication 6 lorsqu'elle dépend de l'une quelconque des revendications 3 à 5, dans laquelle les nervures (44) raccordent la paroi périphérique (42) à la douille (32).

8. Fondation (14) selon la revendication 6 lorsqu'elle ne dépend d'aucune des revendications 3 à 5, dans laquelle les nervures (44) raccordent la paroi périphérique (42) à la colonne (20).

9. Fondation (14) selon l'une quelconque des revendications 6 à 8, dans laquelle les nervures (44) sont constituées de plaques d'acier sensiblement planes.

10. Fondation (14) selon l'une quelconque des revendications précédentes, dans laquelle la colonne (20) s'étend à travers la base (40).

11. Fondation (14) selon l'une quelconque des revendications 1 à 9, dans laquelle la colonne (20) repose sur la base (40).

12. Fondation (14) selon l'une quelconque des revendications précédentes, comprenant, en outre, un système d'injection de coulis (58) qui est conçu pour l'injection de coulis (60) sous la base (40).

13. Fondation (14) selon l'une quelconque des revendications précédentes, comprenant, en outre, un système d'aspiration (62) qui est conçu pour extraire par pompage de l'eau se trouvant sous la base (40).

14. Fondation (14) selon l'une quelconque des revendications précédentes, comprenant, en outre, un matériau de ballast (50) déposé à l'intérieur du ou de chaque compartiment (52).

15. Fondation (14) selon l'une quelconque des revendications précédentes, comprenant, en outre, une berme (56) de matériau granulaire déposée du côté extérieur de la paroi périphérique (42) et accolée à celle-ci.

16. Fondation (14) selon la revendication 15, dans laquelle la berme (56) est composée du même matériau granulaire que le matériau de ballast (50) placé à l'intérieur du ou de chaque compartiment (52).

17. Installation d'éolienne en mer (10) comprenant la fondation (14) selon l'une quelconque des revendications précédentes et une éolienne (12) surmontant la colonne (20).

18. Procédé d'installation d'une fondation sous-marine (14) qui comprend et supporte une colonne verticale (20), le procédé comprenant :
soulever un caisson (16) depuis un navire (64) ou une barge en surface, le caisson (16) comprenant une douille tubulaire (32) propre à coopérer de manière télescopique avec la colonne (20) ;
abaisser le caisson (16) soulevé jusqu'au fond marin (18), puis abaisser la colonne (20) de façon à la mettre en prise avec la douille tubulaire (32) du caisson (16) ; et
déposer du matériau de ballast (50) dans le caisson (16).

19. Procédé d'installation d'une fondation sous-marine (14) qui supporte une colonne verticale (20), le procédé comprenant :
soulever un caisson (16) depuis un navire (64) ou une barge en surface, le caisson (16) comportant une base (40) et étant propre à coopérer avec la colonne (20) ou étant fixé à celle-ci ;
abaisser le caisson (16) soulevé jusqu'au fond marin (18) ;
déposer du matériau de ballast (50) dans le caisson (16) et sur la base (40) du caisson (16) ; et
implanter une jupe périphérique (46) du caisson (16) dans le fond marin (18).

20. Procédé selon la revendication 19, comprenant le fait d'abaisser le caisson (16) avec la colonne (20) fixée au caisson (16).

21. Procédé selon la revendication 19, comprenant le fait d'abaisser la colonne (20) de façon à la mettre en prise avec le caisson (16) précédemment abaissé jusqu'à l'emplacement sur le fond marin.

22. Procédé selon la revendication 18 ou la revendication 21, comprenant le fait de déposer le matériau de ballast (50) avant d'abaisser la colonne (20) de façon à la mettre en prise avec le caisson (16).

23. Procédé selon l'une quelconque des revendications 18 à 22, comprenant le fait de déposer le matériau de ballast (50) dans au moins un filet ou sac (54).

24. Procédé selon l'une quelconque des revendications 18 à 23, comprenant, en outre, le fait de déposer du matériau granulaire de façon à former une berme (56) du côté extérieur d'une paroi périphérique (42) du caisson (16) et en accolement à celle-ci.

25. Procédé selon la revendication 24, comprenant le fait de déposer le matériau de ballast (50) dans le caisson (16) et le matériau granulaire à l'extérieur du caisson (16) en une seule opération.

26. Procédé selon l'une quelconque des revendications 18 à 25, comprenant le fait d'extraire par pompage de l'eau se trouvant sous le caisson (16).

27. Procédé selon l'une quelconque des revendications 18 à 26, comprenant le fait d'incliner le caisson (16) relativement à un plan horizontal lors de l'abaissement du caisson (16) à travers une zone d'action des vagues en surface.
